(19) Europäisches Patentamt
European Patent Office
Office européen des brevets

(11) **EP 2 726 792 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(21) Anmeldenummer: **12728569.0**

(22) Anmeldetag: **20.06.2012**

(51) Int Cl.:
***F24D 19/10*** *(2006.01)*

(86) Internationale Anmeldenummer:
**PCT/EP2012/061819**

(87) Internationale Veröffentlichungsnummer:
**WO 2013/000785 (03.01.2013 Gazette 2013/01)**

(54) **VERFAHREN UND VORRICHTUNGEN ZUM ABGLEICHEN EINER GRUPPE VON VERBRAUCHERN IN EINEM FLUIDTRANSPORTSYSTEM**

METHOD AND DEVICES FOR EQUALIZING A GROUP OF CONSUMERS IN A FLUID TRANSPORT SYSTEM

PROCÉDÉS ET DISPOSITIFS PERMETTANT D'ÉQUILIBRER UN GROUPE D'UTILISATEURS DANS UN SYSTÈME DE TRANSPORT DE FLUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.06.2011 CH 11022011**

(43) Veröffentlichungstag der Anmeldung:
**07.05.2014 Patentblatt 2014/19**

(73) Patentinhaber: **Belimo Holding AG**
**8340 Hinwil (CH)**

(72) Erfinder:
• **LEDERLE, Norbert**
**79725 Laufenburg (DE)**

• **KELLER, Urs**
**CH-8340 Hinwil (CH)**
• **HOBI, Reto**
**CH-8735 St. Gallenkappel (CH)**
• **SCHMIDLIN, Peter**
**CH-8610 Uster (CH)**

(74) Vertreter: **Rentsch Partner AG**
**Rechtsanwälte und Patentanwälte**
**Fraumünsterstrasse 9**
**Postfach 2441**
**8022 Zürich (CH)**

(56) Entgegenhaltungen:
**EP-A1- 0 795 724     EP-A2- 2 085 707**
**EP-A2- 2 157 376     DE-A1- 19 912 588**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Technisches Gebiet

Die vorliegende Erfindung betrifft ein Verfahren und Vorrichtungen zum Abgleichen einer Gruppe von Verbrauchern in einem Fluidtransportsystem. Die vorliegende Erfindung betrifft insbesondere ein Verfahren und Vorrichtungen zum Abgleichen einer Gruppe von Verbrauchern in einem Fluidtransportsystem, in welchem jeder Verbraucher mit einem motorisierten Regelventil zum Regulieren des Durchflusses durch den Verbraucher versehen ist.

Stand der Technik

Fluidtransportsysteme umfassen typischerweise mehrere Verbraucher, d.h. parallele Zweige oder Stränge, durch welche ein flüssiges oder gasförmiges Fluid, beispielsweise zur thermischen Energieverteilung, transportiert wird. Die Verbraucher sind in der Regel unterschiedlich ausgestaltet, das heisst sie weisen unterschiedliche Durchmesser und/oder Längen der Transportleitungen, z.B. Rohrleitungen, auf und haben verschiedene beispielsweise variierende Durchflussmengen respektive Volumenströme. Um in solchen Fluidtransportsystemen eine aus- oder abgeglichene Verteilung des Fluids an die Verbraucher vorzunehmen, werden die Verbraucher jeweils mit einem Ausgleichs- oder Abgleichorgan versehen, beispielsweise ein einstellbares Stellglied, insbesondere ein Ventil, das den Durchflusses durch den betreffenden Verbraucher mit unterschiedlichen Öffnungsgraden respektive Ventilstellungen einstellen kann.

In DE 69706458 wird ein Ausgleichsverfahren eines Netzes für die Verteilung einer nicht-komprimierenden Flüssigkeit beschrieben, in welchem für jeden Zweig zwei Druckanschlussstellen auf beiden Seiten des Ausgleichsorgans und eine weitere davon beabstandete dritte Druckanschlussstelle angeordnet sind. In sämtlichen Zweigen werden Durchflussmessungen jeweils durch Messen des Druckunterschieds auf beiden Seiten des betreffenden Ausgleichsorgans und eine Messung einer Druckdifferenz mittels der dritten Druckanschlussstelle durchgeführt. Auf der Grundlage dieser Messwerte werden die hydraulischen Widerstandskoeffizienten sämtlicher Zweige und Abschnitte auf der Hauptleitung berechnet. Schliesslich werden in Kenntnis des erwünschten Durchflusses in jedem Zweig und unter Verwendung der bestimmten Widerstandskoeffizienten die Einstellungspositionen jedes Abgleichsorgans berechnet und eingestellt. Das Ausgleichsverfahren erfordert bei jedem Ausgleichsorgan mehrere Druckanschlussstellen und ist nicht für einen dynamischen Abgleich eines Fluidtransportsystems eingerichtet.

Die EP 2 085 707 zeigt den hydraulischen Abgleich einer Heizungsanlage, wobei ein Heizgerät mit einer Messvorrichtung für die Druck- und Volumenstrommessung ausgestattet ist. Es sind Mittel vorgesehen zur Erfassung des bereitgestellten Volumenstroms sowie Mittel zur Erfassung der Druckdifferenz zwischen dem Vor- und dem Rücklaufstrom. An den Heizkörper sind Mittel zur Erfassung des Volumenstroms angeordnet, welche zur Eliminierung von Fehler und zur Automatisierung des Abgleichs dienen.

Die EP 0 795 724, welche aus derselben Patentfamilie wie die DE 69706458 ist, zeigt im Wesentlichen dieselben Merkmale wie die DE 69706458.

Die DE 199 12 588 zeigt ein hydraulisches System mit mehreren Rohrleitungssträngen. Zur Verbesserung des Regelverhaltens sind sowohl in einem Hauptkreis als auch in Rohrleitungssträngen der Verbraucherkreise Armaturen mit elektronischer Volumenstrommesseinrichtung und Stellantrieb angeordnet.

Die EP 2 157 376 zeigt eine Anordnung zum hydraulischen Abgleichen eines Systems zum Kühlen oder Heizen mit den Merkmalen des Oberbegriffs von Anspruch 1. Das System umfasst eine Vorlaufleitung, eine Rücklaufleitung, eine Drosseleinrichtung und eine Messeinrichtung für einen Volumenstrom. Für den hydraulischen Abgleich sind Ventile in jeder Leitung vorgesehen, wobei Messmittel zur Ermittlung der Strömungen in den einzelnen Strängen vorgesehen sind.

Im Stand der Technik ist somit zur Bestimmung des Durchflusses bei jedem Verbraucher ein separater Sensor vorgesehen. Dadurch ist insbesondere ein hoher Installationsaufwand erforderlich.

Darstellung der Erfindung

Es ist eine Aufgabe der vorliegenden Erfindung eine Vorrichtung und ein Verfahren zum Abgleichen einer Gruppe von Verbrauchern in einem Fluidtransportsystem vorzuschlagen, welche zumindest einige Nachteile des Stands der Technik nicht aufweisen. Es ist insbesondere eine Aufgabe der vorliegenden Erfindung eine Vorrichtung und ein Verfahren zum Abgleichen einer Gruppe von Verbrauchern in einem Fluidtransportsystem vorzuschlagen, welche für einen dynamischen Abgleich des Fluidtransportsystems eingerichtet sind und nicht bei jedem Verbraucher separate Sensoren zur Bestimmung des Durchflusses erfordern.

Gemäss der vorliegenden Erfindung werden diese Ziele durch die Merkmale der unabhängigen Ansprüche erreicht. Weitere vorteilhafte Ausführungsformen gehen ausserdem aus den abhängigen Ansprüchen und der Beschreibung hervor.

Die oben genannten Ziele werden durch die vorliegende Erfindung insbesondere dadurch erreicht, dass zum Abgleichen einer Gruppe von Verbrauchern in einem Fluidtransportsystem, in welchem jeder Verbraucher mit einem motorisierten Regelventil zum Regulieren des Durchflusses durch den Verbraucher versehen ist, Charakteristikdaten für die Verbraucher gespeichert werden, die für Solldurchflüsse durch jeweils einen der Verbraucher jeweils eine Ventilstellung des entsprechenden Regelventils bestimmen. Mittels eines gemeinsamen Durchflusssensors wird ein aktueller Gesamtdurchfluss durch die Gruppe der Verbraucher ermittelt. Basierend auf dem aktuellen Gesamtdurchfluss und einer Summe der gewünschten Solldurchflüsse durch die Verbraucher wird ein Abgleichfaktor bestimmt. Ein dynamischer Abgleich der Verbraucher wird durch Setzen der Ventilstellungen der entsprechenden Regelventile basierend auf den Charakteristikdaten und dem Abgleichfaktor ausgeführt.

Entsprechend umfasst eine Vorrichtung zum Abgleichen der Gruppe von Verbrauchern im Fluidtransportsystem ein Charakteristikdatenmodul, welches eingerichtet ist, die Charakteristikdaten für die Verbraucher zu speichern, und ein Abgleichmodul, welches eingerichtet ist den Abgleichfaktor basierend auf dem aktuellen Gesamtdurchfluss und der Summe der gewünschten Solldurchflüsse durch die Verbraucher zu bestimmen, und den dynamischen Abgleich der Verbraucher durch Setzen der Ventilstellungen der entsprechenden Regelventile basierend auf den Charakteristikdaten und dem Abgleichfaktor auszuführen.

Durch den Abgleich der Verbraucher basierend auf dem aktuellen Gesamtdurchfluss und der Summe der gewünschten Solldurchflüsse wird ein automatischer und dynamischer Abgleich des Fluidtransportsystems ermöglicht, der mit einem einzigen gemeinsamen Durchflusssensor zur Messung des Gesamtdurchflusses durch die Gruppe der Verbraucher auskommt, ohne dass dazu mehrere separate Durchflusssensoren respektive Druckanschlussstellen in den Regelventilen der einzelnen Verbraucher vorgesehen werden müssen.

Vorzugsweise werden der aktuelle Gesamtdurchfluss und der Abgleichfaktor wiederholte ermittelt und der dynamische Abgleich ausgeführt, bis der aktuelle Gesamtdurchfluss innerhalb eines definierten Grenzbereichs um die Summe der gewünschten Solldurchflüsse liegt. Entsprechend ist das Abgleichmodul eingerichtet, wiederholt den aktuellen Gesamtdurchfluss und den Abgleichfaktor zu ermitteln und den dynamischen Abgleich auszuführen bis der aktuelle Gesamtdurchfluss innerhalb des definierten Grenzbereichs um die Summe der gewünschten Solldurchflüsse liegt. Bei einer vorgegebenen Nulltoleranz wird der dynamische Abgleich ausgeführt, bis der aktuelle Gesamtdurchfluss der Summe der gewünschten Solldurchflüsse entspricht.

Die fortwährende Bestimmung von Gesamtdurchfluss und Abgleichfaktor ermöglicht es, das Fluidtransportsystem respektive die Verbraucher automatisch, dynamisch und kontinuierlich abzugleichen und an veränderte Systembedingungen respektive Verbraucheranforderungen anzupassen.

In einer Ausführungsvariante werden die Charakteristikdaten für die Verbraucher der Gruppe dadurch erfasst, dass die Regelventile für einen ersten Teil der Verbraucher in eine Sperrstellung gesetzt werden und der Durchfluss durch einen zweiten Teil der Verbraucher in verschiedenen Ventilstellungen mittels des gemeinsamen Durchflusssensors gemessen wird. Zum Beispiel werden die Charakteristikdaten für einen Verbraucher der Gruppe jeweils dadurch erfasst, dass die Regelventile für die anderen Verbraucher der Gruppe in eine Sperrstellung gesetzt werden und der Durchfluss durch den einen der Verbraucher in verschiedenen Ventilstellungen mittels des gemeinsamen Durchflusssensors gemessen wird.

Entsprechend ist das Charakteristikdatenmodul eingerichtet, die Charakteristikdaten dadurch zu erfassen, dass es die Regelventile für den ersten Teil der Verbraucher in die Sperrstellung setzt und dass es mittels des gemeinsamen Durchflusssensors den Durchfluss durch den zweiten Teil der Verbraucher in verschiedenen Ventilstellungen misst. Das Charakteristikdatenmodul ist beispielsweise eingerichtet, die Charakteristikdaten für den einen Verbraucher der Gruppe jeweils dadurch zu erfassen, dass es die Regelventile für die anderen Verbraucher der Gruppe in eine Sperrstellung setzt und mittels des gemeinsamen Durchflusssensors den Durchfluss durch den einen der Verbraucher in verschiedenen Ventilstellungen misst.

Die Bestimmung der Charakteristikdaten der Verbraucher respektive Regelventile durch sequentielles Durchmessen eines einzelnen Verbrauchers respektive Regelventils der Gruppe bei geschlossenen Regelventilen der übrigen Verbraucher der Gruppe ermöglicht eine besonders einfache und effiziente Bestimmung. Die gleichzeitige Vermessung mehrerer Verbraucher respektive Regelventile der Gruppe bei geschlossenen Regelventilen der übrigen Verbraucher der Gruppe, beispielsweise eine paarweise Vermessung, ermöglicht eine genauere Bestimmung, wenn der Durchfluss durch die gleichzeitige Öffnung mehrerer Regelventile günstiger in den Arbeitsbereich des verwendeten Durchflusssensors zu liegen kommt.

In einer weiteren Ausführungsvariante wird eine Ausnahmeregelung der Verbraucher ausgeführt, wenn bei mindestens einem der Regelventile eine Anschlagstellung erreicht wird. Entsprechend ist das Abgleichmodul eingerichtet, beim Erreichen einer Anschlagstellung bei mindestens einem der Regelventile eine Ausnahmeregelung der Verbraucher auszuführen. Zum Beispiel werden Prioritätsangaben jeweils für einen der Verbraucher gespeichert, und der Durchfluss durch Verbraucher mit niedriger Priorität wird beim Erreichen einer Anschlagstellung bei einem Regelventil eines Verbrauchers mit höherer Priorität gedrosselt. Entsprechend ist das Charakteristikdatenmodul beispielsweise eingerichtet, für die Verbraucher jeweils eine Prioritätsangabe zu speichern, und das Abgleichmodul ist eingerichtet, den Durchfluss durch die Verbraucher mit niedriger Priorität zu drosseln, wenn bei einem Regelventil eines Verbrauchers mit höherer Priorität durch Anschlagstellung ein zu geringer Durchfluss erkannt wird.

In einer anderen Ausführungsvariante wird beim Erreichen einer definierten Minimalstellung bei mindestens einem der Regelventile zur Vermeidung von Strömungsgeräuschen die Pumpen- bzw. Ventilatorleistung reduziert. Entsprechend ist das Abgleichmodul eingerichtet, zur Vermeidung von Strömungsgeräuschen durch ein Fluid die Pumpen- bzw. Ventilatorleistung zu reduzieren, wenn bei mindestens einem der Regelventile die definierte Minimalstellung erreicht wird. In einer weiteren Ausführungsvariante werden die Regelventile so angesteuert, dass bei mindestens einem Ventil die Maximalstellung erreicht ist. Der Durchfluss wird durch gezieltes Ansteuern des Ventilators der Pumpe bzw. über ein vorgeschaltetes Regelventil der gesamten Gruppe eingeregelt. Entsprechend ist das Abgleichmodul eingerichtet, zur Vermeidung von Strömungsgeräuschen durch ein strömendes Fluid.

In einer weiteren Ausführungsvariante werden die Ventilstellungen der entsprechenden Regelventile basierend auf den Charakteristikdaten, dem Abgleichfaktor und, bei reduzierter Pumpleistung und gleichbleibender Summe der gewünschten Solldurchflüsse durch die Verbraucher, mit einem erhöhten Öffnungsgrad der entsprechenden Regelventile, bis zu einer definierten Maximalstellung bei mindestens einem der Regelventile, gesetzt.

Neben einem Verfahren und einer Vorrichtung zum Abgleichen einer Gruppe von Verbrauchern in einem Fluidtransportsystem bezieht sich die vorliegende Erfindung zudem auf ein Computerprogrammprodukt mit Computerprogrammcode zur Steuerung eines oder mehrerer Prozessoren einer Vorrichtung derart, dass die Vorrichtung das Verfahren zum Abgleichen der Gruppe von Verbrauchern im Fluidtransportsystem ausführt, insbesondere ein Computerprogrammprodukt mit einem computerlesbaren greifbaren, nichtflüchtigen Speichermedium, auf welchem der Computerprogrammcode gespeichert ist.

Kurze Beschreibung der Zeichnungen

Nachfolgend wird eine Ausführung der vorliegenden Erfindung anhand eines Beispieles beschrieben. Das Beispiel der Ausführung wird durch die folgenden beigelegten Figuren illustriert:

Figur 1: zeigt ein Blockdiagramm, welches schematisch ein Fluidtransportsystem mit einer Gruppe von Verbrauchern und einer Vorrichtung zum dynamischen Abgleichen der Verbraucher illustriert.

Figur 2: zeigt ein Blockdiagramm welches, schematisch ein Fluidtransportsystem für gasförmige Fluide mit einer Gruppe von Verbrauchern und einer Vorrichtung zum dynamischen Abgleichen der Verbraucher illustriert.

Figur 3: zeigt ein Flussdiagramm, welches eine Sequenz von Schritten für den dynamischen Abgleich eines Fluidtransportsystems mit einer Gruppe von Verbrauchern illustriert.

Figur 4: zeigt eine Kurve, welche die Abweichung zwischen tatsächlichem Volumenstrom eines Ventils und dem gewünschten Volumenstrom illustriert.

Figur 5: zeigt eine Kurve, welche die Anpassung einer Ventilstellung anhand der Abweichung zwischen tatsächlichem und gewünschten Volumenstrom basierend auf Charakteristikdaten des Ventils illustriert.

Wege zur Ausführung der Erfindung

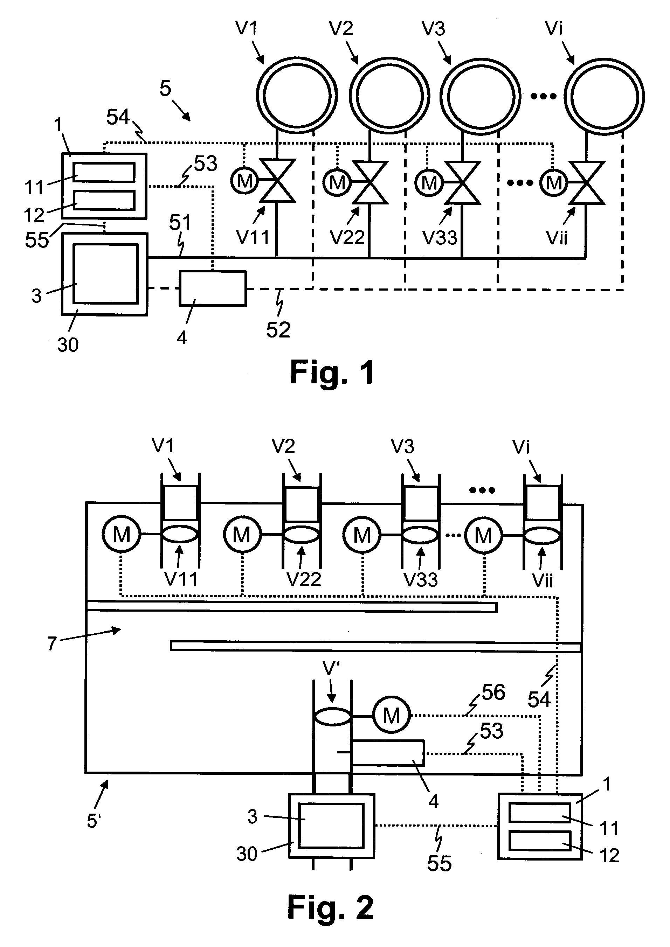

In den Figuren 1 und 2 beziehen sich die Bezugszeichen 5 und 5' jeweils auf Fluidtransportsysteme mit einer Gruppe von mehreren Verbrauchern V1, V2, V3, Vi, beispielsweise HLK- (Heizung, Lüftung und Kühlung) respektive HVAC-(Heating, Ventilating and Air Conditioning) Fluidtransportsysteme 5, 5'. Wie in den Figuren 1 und 2 schematisch dargestellt ist, umfassen die Fluidtransportsysteme 5, 5' jeweils eine Arbeitsmaschine 3 zur Förderung der Fluide im Fluidtransportsystem 5, 5', insbesondere eine oder mehrere Pumpen für die Förderung von Flüssigkeiten, z.B. Wasser, oder einen oder mehrere Ventilatoren zum Fördern von gasförmigen Fluiden, z.B. Luft.

In der Figur 1 ist der geschlossene Kreislauf des Fluidtransportsystems 5 mit einer Zuführleitung 51 (Vorlauf) und einer Rücklaufleitung 52, z.B. Rohrleitungen, dargestellt. Die Verbraucher V1, V2, V3, Vi umfassen beispielsweise einen oder mehrere Vorrichtungen für den Austausch thermischer Energie, insbesondere Wärmetauscher zum Heizen oder Kühlen, beispielsweise Heizkörper, Bodenheizungen oder Kühlaggregate, oder sogenannte Chiller.

Wie in den Figuren 1 und 2 dargestellt ist, weisen die Verbraucher V1, V2, V3, Vi jeweils ein zugeordnetes Regelventil V11, V22, V33, Vii zum Regulieren des Durchflusses zum respektive durch den Verbraucher V1, V2, V3, Vi auf. Die Regelventile V11, V22, V33, Vii sind jeweils im Vorlauf (Zuführleitung 51) oder im Rücklauf (Rücklaufleitung 52) der Verbraucher V1, V2, V3, Vi angeordnet. Die Regelventile V11, V22, V33, Vii umfassen jeweils einen steuerbaren, elektrischen Motor M, der das betreffende Regelventil V11, V22, V33, Vii antreibt und die Öffnung und damit den Durchfluss respektive Volumenstrom des Regelventils V11, V22, V33, Vii durch entsprechendes Einstellen eines Drosselkörpers, z.B. eine Ventilklappe, reguliert.

Das Bezugszeichen 30 bezieht sich auf ein übergeordnetes Steuersystem, welches beispielsweise individuelle Sollwerte für die Durchflüsse $Ft_i$ ("target flow") durch die Regelventile V11, V22, V33, Vii generiert.

Wie in den Figuren 1 und 2 ersichtlich ist, umfasst das Fluidtransportsystem 5, 5' einen Durchflusssensor 4 zum Messen des Gesamtdurchflusses respektive Gesamtvolumenstroms $Fc_{total}$ ("current total flow")durch die Gruppe der Verbraucher V1, V2, V3, Vi. Der Durchflusssensor 4 ist vorzugsweise im Rücklauf angeordnet, er kann jedoch auch im Vorlauf angeordnet sein.

Das in Figur 2 dargestellte Fluidtransportsystem 1' ist für den Transport von gasförmigen Fluiden eingerichtet, wobei die Verbraucher V1, V2, V3, Vi beispielsweise Wohnräume sind, in welche die Regelventile V11, V22, V33, Vii Zuluft zuführen respektive von welchen die Regelventile V11, V22, V33, Vii Abluft wegführen. Den durch die Regelventile V11, V22, V33, Vii regulierten Fluid- respektive Luftdurchlässen ist eine gemeinsame motorisierte Drosselklappe V' und eine Schalldämpfung 7 vorgeschaltet.

In den Figuren 1 und 2 bezieht sich das Bezugszeichen 1 auf eine Abgleichvorrichtung zum Abgleichen der Gruppe von Verbrauchern V1, V2, V3, Vi respektive der Fluidtransportsysteme 5, 5'. Wie in den Figuren 1 und 2 schematisch dargestellt ist, umfasst die Abgleichvorrichtung 1 mehrere funktionale Module insbesondere ein Charakteristikdatenmodul 11 und ein Abgleichmodul 12. Die funktionalen Module sind vorzugsweise programmierte Softwaremodule zur Steuerung eines oder mehrerer Prozessoren der Abgleichvorrichtung 1. Die funktionalen Module sind auf einem computerlesbaren Medium gespeichert, das fest oder entfernbar mit der Abgleichvorrichtung 1 verbunden ist. Der Fachmann wird jedoch verstehen, dass die funktionalen Module in alternativen Ausführungsvarianten teilweise oder vollständig mit Hardware-Komponenten ausgeführt sein können.

Zur Steuerung der Regelventile V11, V22, V33, Vii respektive deren Motoren M ist die Abgleichvorrichtung 1 über Steuerleitungen oder einen Steuerbus 54 mit diesen verbunden. Zur Erfassung des aktuellen Gesamtdurchflusses respektive Gesamtvolumenstroms $Fc_{total}$ durch die Gruppe der Verbraucher V1, V2, V2, V3, Vi ist die Abgleichvorrichtung 1 über eine Messleitung oder einen Datenbus 53 mit dem Durchflusssensor 4 verbunden. Zum Entgegennehmen von Steuersignalen und/oder Steuerparametern, insbesondere Sollwerte für die individuellen Durchflüsse $Ft_i$ durch die Regelventile V11, V22, V33, Vii, ist die Abgleichvorrichtung 1 über eine Datenleitung oder einen Datenbus 55 mit dem Steuersystem 30 verbunden. Schliesslich ist die Abgleichvorrichtung 1 über eine Steuerleitung oder einen Steuerbus 56 auch mit dem Drosselventil V' verbunden.

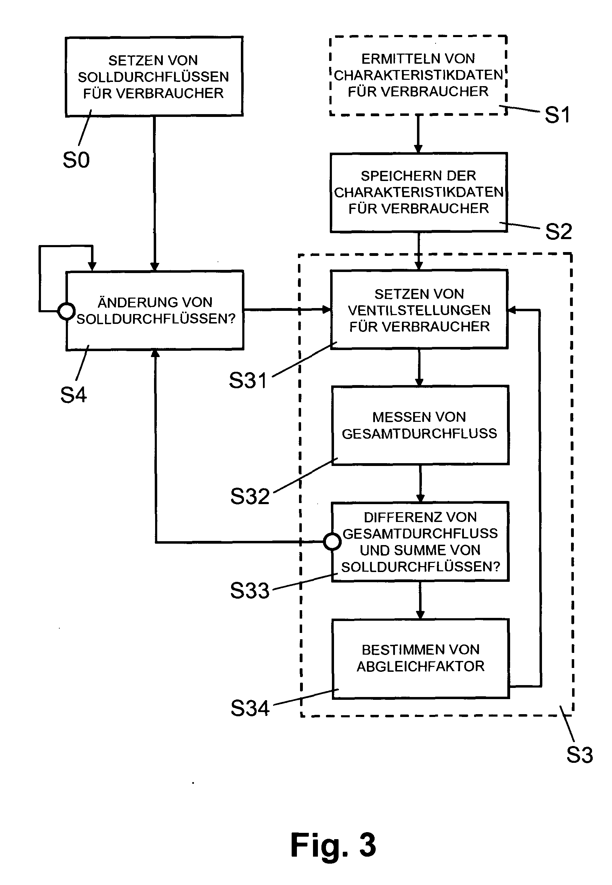

In den folgenden Abschnitten werden mit Bezug zur Figur 3 die Funktionen des Charakteristikdatenmoduls 11 und des Abgleichmoduls 12 sowie mögliche Schrittsequenzen für den dynamischen Abgleich des Fluidtransportsystems 1, 1' beschrieben.

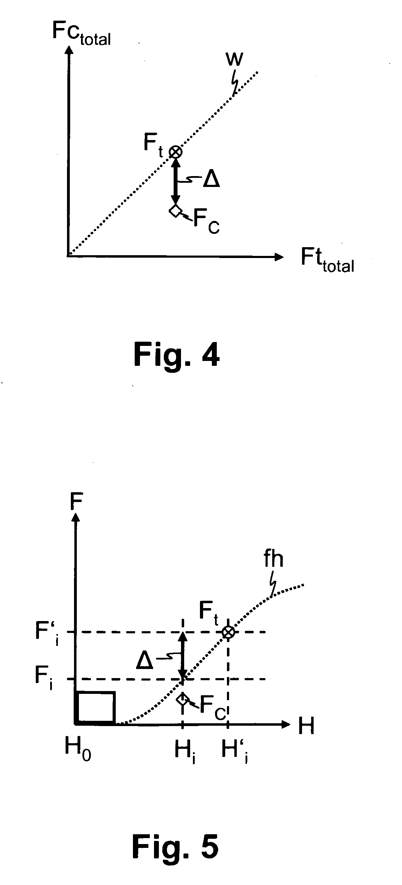

Im vorbereitenden und optionalen Schritt S1 erfasst das Charakteristikdatenmodul 11 für die Verbraucher V1, V2, V3, Vi respektive für die zugeordneten Regelventile V11, V22, V33, Vii Charakteristikdaten, die jeweils für Solldurchflüsse durch den betreffenden Verbraucher V1, V2, V3, Vi respektive durch das zugeordnete Regelventil V11, V22, V33, Vii eine Ventilstellung des betreffenden Regelventils V11, V22, V33, Vii bestimmen. Die Kurve fh der Figur 5 illustriert beispielsweise für ein bestimmtes Regelventil V11, V22, V33, Vii respektive den entsprechenden Verbraucher V1, V2, V3, Vi die Ventilstellung H, die einzustellen ist, um einen gewünschten Sollfurchfluss respektive Volumenstrom F zu erzielen. Umgekehrt kann basierend auf der Kurve fh auch der Durchfluss respektive Volumenstrom F durch den betreffenden Verbraucher V1, V2, V3, Vi respektive durch das zugeordnete Regelventil V11, V22, V33, Vii bestimmt werden, der bei einer bestimmten Ventilstellung H des Regelventils V11, V22, V33, Vii erreicht wird.

Das Charakteristikdatenmodul 11 erfasst die Charakteristikdaten dadurch, dass es ausgehend von einer Sperrsituation, in welcher die gesamte Gruppe der Regelventile V11, V22, V33, Vii gesperrt ist, die Regelventile V11, V22, V33, Vii eines nach dem andern individuell durchmisst. Bei der Ausmessung eines Regelventils V11, V22, V33, Vii wird jeweils in verschiedenen Ventilstellungen H der erzielte Durchfluss F durch das Regelventil V11, V22, V33, Vii gemessen und der betreffenden Ventilstellung H zugeordnet gespeichert. Dabei wird beispielsweise für das auszumessende Regelventil i die Ventilstellung H ausgehend von der geschlossenen Sperrstellung $H_0$ schrittweise geöffnet, also eine höherwertige Ventilstellung H eingestellt, und für jede Ventilstellung $H_i$ des Regelventils i der vom Durchflusssensor 4 gemessene aktuelle Durchfluss respektive Volumenstrom $F_i$ erfasst, der aufgrund der geschlossenen Ventilstellung der anderen Regelventile dem Durchfluss respektive Volumenstrom $F_i$ des auszumessenden Regelventils i entspricht.

In einer Ausführungsvariante, beispielsweise, wenn der Durchfluss durch bloss eines der Regelventile V11, V22, V33, Vii nicht im optimalen Arbeitsbereich des Durchflusssensors 4 liegt, erfolgt die Erfassung der Charakteristikdaten durch Ausmessung von jeweils gleichzeitig mehr als einem der Regelventile V11, V22, V33, Vii, beispielsweise durch gleichzeitige, paarweise Ausmessung von jeweils zwei der Regelventile V11, V22, V33, Vii. Dabei werden die gleichzeitig auszumessenden Regelventile V11, V22, V33, Vii vorzugsweise in jeweils der gleichen Ventilstellung vermessen, also bei jeweils gleicher prozentualer Öffnung. Basierend auf den Charakteristikdaten, die gleichzeitig für mehrere Regelventile V11, V22, V33, Vii erfasst wurden, werden durch arithmetische Operationen die individuellen Charakteristikdaten für die einzelnen Regelventile V11, V22, V33, Vii berechnet.

Im vorbereitenden Schritt S2 werden die Charakteristikdaten für die Regelventile V11, V22, V33, Vii gespeichert. Anstelle der dynamischen Erfassung der Charakteristikdaten im optionalen Schritt S1, werden in einer alternativen Ausführungsvariante bekannte Charakteristikdaten der Regelventile V11, V22, V33, Vii, beispielsweise ab Datenblättern, erfasst und gespeichert. Mit den Charakteristikdaten wird jeweils auch ein Nenndurchfluss, eine Identifizierung und/oder eine Typenbezeichnung des betreffenden Verbrauchers V1, V2, V3, Vi respektive Regelventils V11, V22, V33, Vii gespeichert.

Im Schritt S0 werden im Steuersystem 30 die individuellen Solldurchflüsse $Ft_i$ für die Regelventile V11, V22, V33, Vii bestimmt, beispielsweise aufgrund von aktuellen Sensorwerten und/oder Benutzeranforderungen.

Beim Auffahren (in Betriebnahme) des Fluidtransportsystems 5, 5' oder wenn eine Änderung der Solldurchflüsse $Ft_i$ erkannt wird, wird im Schritt S4 der Schritt S3 für den dynamischen Abgleich des Fluidtransportsystems 5, 5' respektive der Verbraucher V1, V2, V3, Vi ausgelöst und aktiviert.

Im Schritt S31 setzt das Abgleichmodul 12 die Ventilstellungen der Verbraucher V1, V2, V3, Vi respektive Regelventile V11, V22, V33, Vii basierend auf den Solldurchflüssen $Ft_i$ für die einzelnen Verbraucher V1, V2, V3, Vi respektive Regelventile V11, V22, V33, Vii. Dazu verwendet das Abgleichmodul 12 jeweils die individuellen Charakteristikdaten der Verbraucher V1, V2, V3, Vi respektive Regelventile V11, V22, V33, Vii und ermittelt auf der Basis dieser Charakteristikdaten für die Regelventile V11, V22, V33, Vii jeweils die dem Solldurchfluss $Ft_i$ entsprechende Ventilstellung $H_i$, mit welcher im betreffenden Regelventil V11, V22, V33, Vii der zugeordnete aktuelle individuelle Durchfluss $F_i$ erreicht werden soll, der anfänglich dem gewünschten Solldurchfluss $F_i = Ft_i$ entspricht. Wie später beschrieben wird, werden für die Berechungen der Ventilstellungen $H_i$ die aktuellen individuellen Durchflüsse $F_i$ jeweils mit einem Abgleichfaktor $F'_i = \alpha \cdot F_i$ korrigiert, welcher anfänglich auf $\alpha = 1$ gesetzt ist.

In einer Ausführungsvariante setzt das Abgleichmodul 12 die Ventilstellungen der Verbraucher V1, V2, V3, Vi respektive Regelventile V11, V22, V33, Vii zusätzlich unter Berücksichtigung eines optimierten Einsatzes der Arbeitsmaschine 3 zur Förderung der Fluide. Das Abgleichmodul 12 arbeitet beispielsweise als Pumpenoptimierer zur Optimierung der Pumpenleistung. Dazu werden die Ventilstellungen der Verbraucher V1, V2, V3, Vi respektive Regelventile V11, V22, V33, Vii bis zu einem definierten maximalen Grenzwert, beispielsweise 70% oder 80% der maximalen Öffnung, erhöht geöffnet, während die Pumpleistung entsprechend so reduziert wird, dass der zu erzielende Gesamtdurchfluss gleich bleibt. Somit kann in den einzelnen Verbrauchern V1, V2, V3, Vi und insgesamt im Fluidtransportsystem 5, 5' jeweils derselbe Durchfluss respektive Volumenstrom bei reduzierter Pumpleistung erreicht werden.

In einer Variante setzt das Abgleichmodul 12 die Ventilstellungen der Verbraucher V1, V2, V3, Vi respektive Regelventile V11, V22, V33, Vii zusätzlich unter Berücksichtigung eines optimierten Betrieb des Wärme- bzw. Kälteerzeugers, so dass die Vorlauftemperatur maximiert bzw. minimiert werden kann, wobei mindestens ein Ventil eine Anschlagsstellung erreicht.

In einer Ausführungsvariante wird zudem vom Abgleichmodul 12 untersucht, ob die Ventilstellung mindestens einer der Verbraucher V1, V2, V3, Vi respektive eines der Regelventile V11, V22, V33, Vii eine Anschlagstellung mit maximaler Öffnung oder eine definierte Minimalstellung erreicht hat. Dabei sind Ventilstellungen beispielsweise als Zahlenwerte angegeben, die einen Öffnungsgrad, z.B. in Winkelgraden oder Bruchteilen, z.B. Prozenten, oder einen entsprechenden Steuerwert angeben. Die Anschlagstellung und/oder die definierte Minimalstellung eines Verbrauchers V1, V2, V3, Vi respektive Regelventils V11, V22, V33, Vii werden beispielsweise als Teil der betreffenden Charakteristikdaten gespeichert. Wenn eine Anschlagstellung oder eine definierte Minimalstellung erreicht wurde, führt das Abgleichmodul 12 eine entsprechende definierte Ausnahmeregelung der Verbraucher V1, V2, V3, Vi respektive Regelventile V11, V22, V33, Vii aus.

In einer Variante sieht die Ausnahmeregelung für eine festgestellte Anschlagstellung vor, dass der Durchfluss zugunsten des Verbrauchers V1, V2, V3, Vi respektive Regelventils V11, V22, V33, Vii im Anschlag bei den anderen Regelventile V11, V22, V33, Vii der Gruppe gedrosselt wird. Dazu werden für die Verbraucher V1, V2, V3, Vi respektive Regelventile V11, V22, V33, Vii jeweils zugeordnete Prioritätsangaben, beispielsweise als Teil der betreffenden Charakteristikdaten, gespeichert. Die Prioritätsangaben sind beispielsweise Klassifizierungs- oder Zahlenwerte die eine hohe respektive niedrige Wichtigkeit oder eine bestimmte Stufe in einer mehrwertigen Skala angeben. Beim Feststellen einer Anschlagstellung, reduziert das Abgleichmodul 12 somit die Öffnung und damit den Durchfluss durch weniger wichtigere Verbraucher V1, V2, V3, Vi respektive Regelventile V11, V22, V33, Vii, die eine Prioritätsangabe mit einem niedrigeren Wert als der Verbraucher V1, V2, V3, Vi respektive das Regelventil V11, V22, V33, Vii in der Anschlagstellung aufweisen.

In einer Variante sieht die Ausnahmeregelung für eine festgestellte definierte Minimalstellung vor, dass zur Vermeidung von Strömungsgeräuschen die Ventilator- bzw. Pumpenleistung in der Arbeitsmaschine 3 zur Förderung gasförmiger Fluide im Fluidtransportsystem 5, 5', d.h. im Ventilator, reduziert wird.

Im Schritt S32 ermittelt das Abgleichmodul 12 über den Durchflusssensor 4 den aktuellen Gesamtdurchfluss respektive Gesamtvolumenstrom $Fc_{total}$ durch die Gruppe der Verbraucher V1, V2, V3, Vi respektive Regelventile V11, V22, V33, Vii.

Im Schritt S33 überprüft das Abgleichmodul 12, ob eine Differenz besteht zwischen dem aktuellen, erzielten

Gesamtdurchfluss respektive Gesamtvolumenstrom $Fc_{total}$ und der Summe der Sollfurchflüsse $Ft_{total} = \sum_i Ft_i$ ("total traget flow") für die gesamte Gruppe der Verbraucher V1, V2, V3, Vi respektive Regelventile V11, V22, V33, Vii. Figur 4 illustriert schematisch die Abweichung $\Delta$ eines aktuellen Durchflusswerts $Fc$ von einem Solldurchfluss $Ft$ in einem Diagramm, in welchem die Wertelinie w die Übereinstimmung vom aktuellen Gesamtdurchfluss respektive Gesamtvolumenstrom $Fc_{total}$ mit der Summe der Solldurchflüsse $Ft_{total}$ darstellt. Wenn keine Abweichung respektive Differenz besteht, das heisst wenn der aktuelle Gesamtdurchfluss $Fc_{total}$ dem gesamten Solldurchfluss $Ft_{total} = \sum_i Ft_i$ entspricht und das System in einem abgeglichenen Zustand ist, wird im Schritt S4 die Änderung eines Solldurchflusses $Ft_i$ abgewartet. Andernfalls, wenn der aktuelle Gesamtdurchfluss $Fc_{total}$ vom gewünschten Gesamtsolldurchfluss $Ft_{total} = \sum_i Ft_i$ abweicht, beispielsweise wenn die Differenz einen definierten Schwellwert überschreitet und die Summe der gewünschten Solldurchflüsse $Ft_{total} = \sum_i Ft_i$ nicht innerhalb eines definierten Grenzbereichs um den aktuellen Gesamtdurchfluss respektive Gesamtvolumenstrom $Fc_{tatal}$ liegt, fährt das Abgleichmodul im Schritt S34 fort.

Im Schritt S34 bestimmt das Abgleichmodul 12 auf der Basis des aktuellen, tatsächlich erreichten gemessenen Gesamtdurchflusses $Fc_{total}$ und dem gewünschten Gesamtsolldurchfluss $Ft_{total} = \sum_i Ft_i$ einen Abgleichfaktor

$$\alpha = \frac{\sum_i Ft_i}{Fc_{total}},$$

der sich aus dem Verhältnis vom gewünschten Gesamtsolldurchfluss $Ft_{total}$ und dem tatsächlich gemessenen aktuellen Gesamtdurchfluss $Fc_{total}$ ergibt, und fährt im Schritt S31 mit der Berechnung neuer korrigierter Ventilstellungen $H'_i$ fort, bei welchen die aktuellen individuellen Durchflüsse $F_i$ jeweils mit einem Abgleichfaktor $F'_i = \alpha \cdot F_i$ korrigiert werden (wobei die korrigierten individuellen Durchflüsse $F'_i$ im nächsten Durchgang zum neuen aktuellen individuellen Durchfluss $F_i$ werden).

Tabelle 1 zeigt ein Beispiel einer Werteentwicklung (zeitlicher Verlauf von oben nach unten) bei einem vereinfachten Fluidtransportsystem 5, 5' mit zwei Verbrauchern V1, V2:

Tabelle 1

| Gesamtwerte | | | Verbraucher V1 respektive Regelventil V11 | | | | Verbraucher V2 respektive Regelventil V22 | | | |
|---|---|---|---|---|---|---|---|---|---|---|
| $Fc_{total}$ | $Ft_{total}$ | $\alpha = \dfrac{Ft_{total}}{Fc_{total}}$ | $F_1$ | $F'_1$ | $H_1$ | $H'_1$ | $F_2$ | $F'_2$ | $H_2$ | $H'_2$ |
| 50 | 100 | 2.00 | 60 | 120 | 20° | 40° | 40 | 80 | 15° | 30° |
| 80 | 100 | 1.25 | 120 | 150 | 40° | 43° | 80 | 100 | 30° | 35° |
| 91 | 100 | 1.10 | 150 | 165 | 43° | 44° | 100 | 110 | 35° | 38° |
| 100 | 100 | 1.00 | 165 | 165 | 44° | 44° | 110 | 110 | 38° | 38° |

In einer Ausführungsvariante sind im Fluidtransportsystem 5 zudem Temperatursensoren angeordnet, die ermöglichen in den Verbrauchern V1, V2, V3, Vi jeweils die Temperaturdifferenz $\Delta T_i = Tin_i - Tout_i$ zwischen Eingangstemperatur $Tin_i$ und Ausgangstemperatur $Tout_i$ des zugeführten respektive zurückzuführenden Fluids bei der betreffenden Vorrichtung für den Austausch thermischer Energie (Wärmetauscher) zu bestimmen. Für die Bestimmung der Eingangstemperatur $Tin_i$ ist beispielsweise ein gemeinsamer Temperatursensor im Vorlauf zu den Verbrauchern V1, V2, V3, Vi angeordnet oder es sind mehrere separate Temperatursensoren in den Vorläufen der einzelnen Verbraucher V1, V2, V3, Vi vorgesehen. Die verschiedenen Ausgangstemperaturen $Tout_i$ werden jeweils durch separate Temperatursensoren in den Rückläufen der einzelnen Verbraucher V1, V2, V3, Vi gemessen. Die Abgleichvorrichtung 1 ist mit den Temperatursensoren verbunden und eingerichtet die Eingangstemperaturen $Tin_i$ und Ausgangstemperaturen $Tout_i$ der einzelnen Verbraucher V1, V2, V3, Vi zu erfassen und die jeweiligen Temperaturdifferenzen $\Delta T_i = Tin_i - Tout_i$ für

die Verbraucher V1, V2, V3, Vi zu ermitteln. Die Abgleichvorrichtung 1 ist zudem eingerichtet, im abgeglichenen Zustand, basierend auf dem gemessenen aktuellen Gesamtdurchfluss respektive Gesamtvolumenstrom $Fc_{total}$ und den individuellen Solldurchflüssen $Ft_i$ und Temperaturdifferenzen $\Delta T_i$ die anteilmässige aktuelle Energieabgabe

$$Ec_i = \frac{Fc_{total} \cdot Ft_i \cdot \Delta T_i}{Ft_{total}}$$

("current individual energy") durch die Verbraucher V1, V2, V3, Vi zu ermitteln. Die Abgleichvorrichtung 1 bestimmt zudem die gesamte Energieabgabe $Ec_{total} = \sum_i Ec_i$ ("current total energy") durch die Verbraucher V1, V2, V3, Vi. Die ermittelte Gesamtenergie $Ec_{total}$ wird in der Abgleichvorrichtung 1 oder im übergeordneten Steuersystem 30 zur Regelung und insbesondere Begrenzung der über das Fluidtransportsystem 5, 5' abzugebenden Gesamtenergie $Et_{total} = f(Ec_{total})$ ("total target energy") eingesetzt. Somit ist es möglich im Fluidtransportsystem 5, 5' mit der Durchflussmessung respektive Volumenstrommessung in bloss einem einzigen, gemeinsamen Durchflusssensor 4 sowohl die in den einzelnen Verbrauchern V1, V2, V3, Vi abgegebenen individuellen Energiemengen $Ec_i$ als auch die gesamte im Fluidtransportsystem 5, 5' abgegebene Energie $Ec_{total}$ zu messen und zu regeln.

## Patentansprüche

1. Verfahren zum Abgleichen einer Gruppe von Verbrauchern (V1, V2, V3, Vi) in einem Fluidtransportsystem (5, 5'), in welchem jeder Verbraucher (V1, V2, V3, Vi) mit einem motorisierten Regelventil (V11, V22, V33, Vii) zum Regulieren des Durchflusses durch den Verbraucher (V1, V2, V3, Vi) versehen ist, **gekennzeichnet durch**:

   Speichern (S2) von Charakteristikdaten der Regelventile (V11, V22, V33, Vii) für die Verbraucher (V1, V2, V3, Vi), die für Solldurchflüsse ($F_i$) **durch** jeweils das einem der Verbraucher (V1, V2, V3, Vi) zugeordnete Regelventil (V11, V22, V33, Vii) jeweils eine Ventilstellung ($H_i$) des entsprechenden Regelventils (V11, V22, V33, Vii) bestimmen,
   Ermitteln (S32) eines aktuellen Gesamtdurchflusses **durch** die Gruppe der Verbraucher (V1, V2, V3, Vi) mittels eines gemeinsamen Durchflusssensors (4),
   Bestimmen (S34) eines Abgleichfaktors basierend auf dem aktuellen Gesamtdurchfluss und einer Summe der gewünschten Solldurchflüsse **durch** die Verbraucher (V1, V2, V3, Vi), und
   Ausführen (S3) eines dynamischen Abgleichs der Verbraucher (V1, V2, V3, Vi) **durch** Setzen der Ventilstellungen ($H_i$) der entsprechenden Regelventile (V11, V22, V33, Vii) basierend auf den Charakteristikdaten der Regelventile (V11, V22, V33, Vii) und dem Abgleichfaktor.

2. Verfahren nach Anspruch 1, **gekennzeichnet durch** wiederholtes Ermitteln (S32, S34) des aktuellen Gesamtdurchflusses und des Abgleichfaktors und Ausführen (S3) des dynamischen Abgleichs bis der aktuelle Gesamtdurchfluss innerhalb eines definierten Grenzbereichs um die Summe der gewünschten Solldurchflüsse liegt.

3. Verfahren nach einem der Ansprüche 1 oder 2, **gekennzeichnet durch** Erfassen (S1) der Charakteristikdaten der Regelventile (V11, V22, V33, Vii) für die Verbraucher (V1, V2, V3, Vi) der Gruppe **durch** Setzen der Regelventile (V11, V22, V33, Vii) für einen ersten Teil der Verbraucher (V1, V2, V3, Vi) in eine Sperrstellung, und Messen des Durchflusses (F) **durch** einen zweiten Teil der Verbraucher (V1, V2, V3, Vi) in verschiedenen Ventilstellungen (H) mittels des gemeinsamen Durchflusssensors (4).

4. Verfahren nach einem der Ansprüche 1 bis 3, **gekennzeichnet durch**, Erfassen (S1) der Charakteristikdaten eines Regelventils (V11, V22, V33, Vii) für einen Verbraucher (V1, V2, V3, Vi) der Gruppe jeweils **durch** Setzen der Regelventile (V11, V22, V33, Vii) für die anderen Verbraucher (V1, V2, V3, Vi) der Gruppe in eine Sperrstellung, und Messen des Durchflusses (F) durch das Regelventil (V11, V22, V33, Vii) des einen der Verbraucher (V1, V2, V3, Vi) in verschiedenen Ventilstellungen (H) mittels des gemeinsamen Durchflusssensors (4).

5. Verfahren nach einem der Ansprüche 1 bis 4, **gekennzeichnet durch**, Ausführen einer Ausnahmeregelung der Verbraucher (V1, V2, V3, Vi) beim Erreichen einer Anschlagstellung bei mindestens einem der Regelventile (V11, V22, V33, Vii).

6. Verfahren nach einem der Ansprüche 1 bis 5, **gekennzeichnet durch**, Speichern von Prioritätsangaben jeweils für einen der Verbraucher (V1, V2, V3, Vi), und Drosseln des Durchflusses **durch** Verbraucher (V1, V2, V3, Vi) mit niedriger Priorität, beim Erreichen einer Anschlagstellung bei einem Regelventil (V11, V22, V33, Vii) eines Verbrauchers (V1, V2, V3, Vi) mit höherer Priorität.

7. Verfahren nach einem der Ansprüche 1 bis 6, **gekennzeichnet durch**, Reduzieren einer Ventilator- bzw. Pumpenleistung beim Erreichen einer definierten Minimalstellung bei mindestens einem der Regelventile (V11, V22, V33, Vii) zur Vermeidung von Strömungsgeräuschen **durch** ein Fluid.

8. Verfahren nach einem der Ansprüche 1 bis 7, **gekennzeichnet durch**, Setzen der Ventilstellungen ($H_i$) der entsprechenden Regelventile (V11, V22, V33, Vii) basierend auf den Charakteristikdaten, dem Abgleichfaktor und, bei reduzierter Pumpleistung und gleichbleibender Summe der gewünschten Solldurchflüsse **durch** die Verbraucher (V1, V2, V3, Vi), mit einem erhöhten Öffnungsgrad der entsprechenden Regelventile (V11, V22, V33, Vii) bis zu einer definierten Maximalstellung bei mindestens einem der Regelventile (V11, V22, V33, Vii).

9. Vorrichtung (1) zum Abgleichen einer Gruppe von Verbrauchern (V1, V2, V3, Vi) in einem Fluidtransportsystem (5, 5'), in welchem jeder Verbraucher (V1, V2, V3, Vi) mit einem motorisierten Regelventil (V11, V22, V33, Vii) zum Regulieren des Durchflusses durch den Verbraucher (V1, V2, V3, Vi) versehen ist und ein gemeinsamer Durchflusssensor (4) zum Messen eines Gesamtdurchflusses durch die Gruppe von Verbrauchern (V1, V2, V3, Vi) vorgesehen ist, **gekennzeichnet durch**:

   ein Charakteristikdatenmodul (11), welches eingerichtet ist, für die Verbraucher (V1, V2, V3, Vi) jeweils Charakteristikdaten der zugeordneten Regelventile (V11, V22, V33, Vii) zu speichern, die für Solldurchflüsse ($F_i$) durch das dem betreffenden Verbraucher (V1, V2, V3, Vi) zugeordnete Regelventil (V11, V22, V33, Vii) jeweils eine Ventilstellung ($H_i$) des entsprechenden Regelventils (V11, V22, V33, Vii) bestimmen, und
   ein Abgleichmodul (12), welches eingerichtet ist mittels des Durchflusssensors (4) den aktuellen Gesamtdurchfluss **durch** die Gruppe der Verbraucher (V1, V2, V3, Vi) zu ermitteln, einen Abgleichfaktor basierend auf dem aktuellen Gesamtdurchfluss und einer Summe der gewünschten Solldurchflüsse **durch** die Verbraucher (V1, V2, V3, Vi) zu bestimmen, und
   einen dynamischen Abgleich der Verbraucher (V1, V2, V3, Vi) **durch** Setzen der Ventilstellungen ($H_i$) der entsprechenden Regelventile (V11, V22, V33, Vii) basierend auf den Charakteristikdaten der Regelventile (V11, V22, V33, Vii) und dem Abgleichfaktor auszuführen.

10. Vorrichtung (1) nach Anspruch 9, **dadurch gekennzeichnet, dass** das Abgleichmodul (12) eingerichtet ist, wiederholt den aktuellen Gesamtdurchfluss und den Abgleichfaktor zu ermitteln und den dynamischen Abgleich auszuführen bis der aktuelle Gesamtdurchfluss innerhalb eines definierten Grenzbereichs um die Summe der gewünschten Solldurchflüsse liegt.

11. Vorrichtung (1) nach einem der Ansprüche 9 oder 10, **dadurch gekennzeichnet, dass** das Charakteristikdatenmodul (11) eingerichtet ist, die Charakteristikdaten der Regelventile (V11, V22, V33, Vii) für die Verbraucher (V1, V2, V3, Vi) der Gruppe dadurch zu erfassen, dass die Regelventile (V11, V22, V33, Vii) für einen ersten Teil der Verbraucher (V1, V2, V3, Vi) in eine Sperrstellung gesetzt werden, und dass mittels des gemeinsamen Durchflusssensors (4) der Durchfluss (F) durch einen zweiten Teil der Verbraucher (V1, V2, V3, Vi) in verschiedenen Ventilstellungen (H) gemessen wird.

12. Vorrichtung (1) nach einem der Ansprüche 9 bis 11, **dadurch gekennzeichnet, dass** das Charakteristikdatenmodul (11) eingerichtet ist, die Charakteristikdaten eines Regelventils (V11, V22, V33, Vii) für einen der Verbraucher (V1, V2, V3, Vi) jeweils dadurch zu erfassen, dass die Regelventile (V11, V22, V33, Vii) für die anderen Verbraucher (V1, V2, V3, Vi) der Gruppe in eine Sperrstellung gesetzt werden, und dass mittels des gemeinsamen Durchflusssensors (4) der Durchfluss (F) durch das Regelventil (V11, V22, V33, Vii) des einen der Verbraucher (V1, V2, V3, Vi) in verschiedenen Ventilstellungen (H) gemessen wird.

13. Vorrichtung (1) nach einem der Ansprüche 9 bis 12, **dadurch gekennzeichnet, dass** das Abgleichmodul (12) eingerichtet ist, eine Ausnahmeregelung der Verbraucher (V1, V2, V3, Vi) auszuführen beim Erreichen einer Anschlagstellung bei mindestens einem der Regelventile (V11, V22, V33, Vii).

14. Vorrichtung (1) nach einem der Ansprüche 9 bis 13, **dadurch gekennzeichnet, dass** das Charakteristikdatenmodul (11) eingerichtet ist, für die Verbraucher (V1, V2, V3, Vi) jeweils eine Prioritätsangabe zu speichern, und dass das Abgleichmodul (12) eingerichtet ist, den Durchfluss durch Verbraucher (V1, V2, V3, Vi) mit niedriger Priorität zu drosseln, beim Erreichen einer Anschlagstellung bei einem Regelventil (V11, V22, V33, Vii) eines Verbrauchers (V1, V2, V3, Vi) mit höherer Priorität.

**15.** Vorrichtung (1) nach einem der Ansprüche 9 bis 14, **dadurch gekennzeichnet, dass** das Abgleichmodul (12) eingerichtet ist, zur Vermeidung von Strömungsgeräuschen durch ein Fluid eine Ventilator- bzw. Pumpenleistung zu reduzieren beim Erreichen einer definierten Minimalstellung bei mindestens einem der Regelventile (V11, V22, V33, Vii).

**16.** Vorrichtung nach einem der Ansprüche 9 bis 15, **dadurch gekennzeichnet, dass** das Abgleichmodul (12) eingerichtet ist, die Ventilstellungen ($H_i$) der entsprechenden Regelventile (V11, V22, V33, Vii) basierend auf den Charakteristikdaten, dem Abgleichfaktor und, bei reduzierter Pumpleistung und gleichbleibender Summe der gewünschten Solldurchflüsse durch die Verbraucher (V1, V2, V3, Vi), mit einem erhöhten Öffnungsgrad der entsprechenden Regelventile (V11, V22, V33, Vii) bis zu einer definierten Maximalstellung bei mindestens einem der Regelventile (V11, V22, V33, Vii) zu setzen.

**17.** Computerprogrammprodukt umfassend Computerprogrammcode zur Steuerung eines oder mehrerer Prozessoren einer Vorrichtung (1) derart, dass die Vorrichtung (1) ein Verfahren nach einem der Ansprüche 1-8 zum Abgleichen einer Gruppe von Verbrauchern (V1, V2, V3, Vi) in einem Fluidtransportsystem (5, 5') ausführt.


**Claims**

**1.** A method for balancing a group of consumers (V1, V2, V3, Vi) in a fluid transport system (5, 5'), in which each consumer (V1, V2, V3, Vi) is provided with a motorized control valve (V11, V22, V33, Vii) for regulating the flow rate through the consumers (V1, V2, V3, Vi), **characterized by**:

storing (S2) the characteristic data of the control valves (V11, V22, V33, Vi) for the consumers (V1, V2, V3, Vi), which determine a valve position ($H_i$) of the corresponding control valve (V11, V22, V33, Vii) in each case for target flow rates ($F_i$) through the control valve assigned in each case to one of the consumers (V1, V2, V3, Vi), determining (S32) a current total flow rate through the group of consumers (V1, V2, V3, Vi) by means of a common flow sensor (4), determining (S34) a balancing factor based on the current total flow and a sum of the desired target flow rates through the consumers (V1, V2, V3, Vi), performing (S3) a dynamic balance of the consumers (V1, V2, V3, Vi) by setting the valve positions ($H_i$) of the corresponding control valves (V11, V22, V33, Vii) based on the characteristic data of the control valves (V11, V22, V33, Vii) and the balancing factor.

**2.** A method according to claim 1, **characterized by** periodically determining (S32, S34) the current total flow and the balancing factor and performing (S3) the dynamic balance until the current total flow is within a defined threshold region around the sum of the desired target flow rates.

**3.** A method according to claims 1 or 2, **characterized by** recording (S1) the characteristic data of the control valves (V11, V22, V33, Vii) for the consumers (V1, V2, V3, Vi) of the group by setting the control valves (V11, V22, V33, Vii) for a first part of consumers (V1, V2, V3, Vi) in a locked position, and measuring the flow (F) through a second part of the consumers (V1, V2, V3, Vi) in different valve positions (H) by means of the common flow sensor (4).

**4.** A method according to any one of claims 1 to 3, **characterized by** recording (S1) the characteristic data of a control valve (V11, V22, V33, Vii) for the consumer (V1, V2, V3, Vi) of the group in each case by setting the control valves (V11, V22, V33, Vii) for the other consumers (V1, V2, V3, Vi) of the group in a locked position, and measuring the flow (F) through the control valve (V11, V22, V33, Vii) of the one of the consumers (V1, V2, V3, Vi) in different valve positions (H) by means of the common flow sensor (4).

**5.** A method according to any one of claims 1 to 4, **characterized by** performing an exceptional control of the consumers (V1, V2, V3, Vi) when a stop position is reached by at least one of the control valves (V11, V22, V33, Vii).

**6.** A method according to any one of claims 1 to 5, **characterized by** storing priority data for each consumer (V1, V2, V3, Vi), and restricting the current flow through consumers (V1, V2, V3, Vi) of less priority, when a stop position is reached by a control valve (V11, V22, V33, Vii) of a consumer (V1, V2, V3, Vi) of higher priority.

**7.** A method according to any one of claims 1 to 6, **characterized by** reducing a fan- or pump power, when a defined minimum position is reached by at least one of the control valves (V11, V22, V33, Vii) to prevent flow noise through a fluid.

8. A method according to any one of claims 1 to 7, **characterized by** setting the valve positions ($H_1$) of the corresponding control valves (V1, V2, V3, Vi) based on the characteristic data, the balancing factor and, in the case of reduced pump power and constant sum of the desired target flow rates through the consumers (V1, V2, V3, Vi), with an increased opening degree of the corresponding control valves (V11, V22, V33, Vii) up to a defined maximum position in the case of at least one of the control valves (V11, V22, V33, Vii).

9. A device (1) for balancing a group of consumers (V1, V2, V3, Vi) in a fluid transport system (5, 5'), in which every consumer (V1, V2, V3, Vi) is provided with a motorized control valve (V11, V12, V3, Vii) to regulate the flow through the consumers (V1, V2, V3, Vi) and a common flow sensor (4) to measure a total flow through the group of consumers (V1, V2, V3, Vi), **characterized by**:

a characteristic data module (11), which is designed to store characteristic data for the consumers (V1, V2, V3, Vi) of the respectively assigned control valves (V11, V22, V33, Vii), which determine a respective position ($H_i$) of the corresponding control valve (V11, V22, V33, Vii) for target flow rate ($F_1$) through the control valve (V11, V22, V33, Vii) assigned to the relevant consumers (V1, V2, V3, Vi), and
a balancing module (12), which is designed by means of the flow sensor (4) to ascertain the current total flow through the consumers (V1, V2, V3, Vi), to determine a balancing factor based on the current total flow and a sum of the desired target flow rates through the consumers (V1, V2, V3, Vi), and to perform a dynamic balancing of the consumers (V1, V2, V3, Vi) by setting the valve positions ($H_1$) of the corresponding control valves (V11, V22, V33, Vii) based on the characteristic data of the control valves (V11, V22, V33, Vii) and the balancing factor.

10. A device (1) according to claim 9, **characterized in that** the balancing module (12) is equipped to periodically ascertain the current total flow and the balancing factor and to perform the dynamic balancing until the current flow is within a defined threshold range around the sum of the desired target flow rates.

11. A device (1) according to claims 9 or 10, **characterized in that** the characteristic data module (11) is designed to record the characteristic data of the control valves (V11, V22, V33, Vii) for the consumers (V1, V2, V3, Vi) of the group, such that the control valves (V11, V22, V33, Vii) for a first part of the consumers (V1, V2, V3, Vi) are set in a locked position, and that the flow through a second part of the consumers (V1, V2, V3, Vi) is measured in different valve positions (H) by means of the common flow sensor (4).

12. A device (1) according to any one of claims 9 to 11, **characterized in that** the characteristic data module (11) is designed to record the characteristic data in each case of a control valve (V11, V22, V33, Vii) for one of the consumers (V1, V2, V3, Vi) of the group, such that the control valves (V11, V22, V33, Vii) for the other consumers (V1, V2, V3, Vi) of the group are set in a locked position and that the flow (F) through the control valve (V11, V22, V33, Vii) of the one of the consumers (V1, V2, V3, Vi) is measured in different valve positions (H) by means of the common flow sensor (4).

13. A device (1) according to any one of claims 9 to 12, **characterized in that** the balancing module (12) is designed to perform an exceptional control of the consumers (V1, V2, V3, Vi), when a stop position is reached by at least one of the control valves (V11, V22, V33, Vii).

14. A device (1) according to any one of claims 9 to 13, **characterized in that** the characteristic data module (11) is designed to store a priority data in each case for the consumers (V1, V2, V3, Vi), and that the balancing module (12) is designed to restrict the flow through consumers (V1, V2, V3, Vi) with lower priority, when a stop position is reached by a control valve (V11, V22, V33, Vii) of a consumer (V1, V2, V3, Vi) with higher priority.

15. A device (1) according to any one of claims 9 to 14, **characterized in that** the balancing module (12) is designed to reduce a fan- or pump power to prevent flow noise through a fluid, when a defined minimum position is reached by at least one of the control valves (V11, V22, V33, Vii).

16. A device according to any one of claims 9 to 15, **characterized in that** the balancing module (12) is designed to set the valve positions ($H_1$) of the corresponding control valves (V11, V22, V33, Vii) based on the characteristic data, the balancing factor and, in the case of reduced pump power and constant sum of the desired target flow rate through the consumers (V1, V2, V3, Vi), at an increased opening degree of the corresponding control valves (V11, V22, V33, Vii) up to a defined maximum position in the case of at least one of the control valves (V11, V22, V33, Vii).

**17.** A computer program comprising a computer program code for the control of one or more processors of a device (1), such that the device (1) carries out a method according to any one of claims 1 - 8 for balancing a group of consumers (V1, V2, V3, Vi) in a fluid transport system (5, 5').

**Revendications**

**1.** Procédé d'ajustement d'un groupe de consommateurs (V1, V2, V3, Vi) dans un système de transport de fluide (5, 5') dans lequel chaque consommateur (V1, V2, V3, Vi) est équipé d'une vanne de régulation motorisée (V11, V22, V33, Vii) qui sert à réguler le débit à travers le consommateur (V1, V2, V3, Vi), **caractérisé par** les étapes consistant à :

mémoriser (S2) des données caractéristiques des vannes de régulation (V11, V22, V33, Vii), destinées aux consommateurs (V1, V2, V3, Vi), qui déterminent pour chacun des débits nominaux ($F_i$) à travers la vanne de régulation (V11, V22, V33, Vii) associée à chacun des consommateurs (V1, V2, V3, Vi) une position ($H_i$) de la vanne de régulation (V11, V22, V33, Vii) correspondante,
déterminer (S32) un débit total actuel à travers le groupe de consommateurs (V1, V2, V3, Vi) au moyen d'un capteur de débit commun (4),
définir (S34) un facteur d'ajustement sur la base du débit total actuel et d'une somme des débits nominaux souhaités à travers les consommateurs (V1, V2, V3, Vi), et
effectuer (S3) un ajustement dynamique des consommateurs (V1, V2, V3, Vi) par réglage des positions ($H_i$) des vannes de régulation (V11, V22, V33, Vii) correspondantes sur la base des données caractéristiques des vannes de régulation (V11, V22, V33 Vii) et du facteur d'ajustement.

**2.** Procédé selon la revendication 1, **caractérisé par** l'étape consistant à déterminer (S32, S34) de façon répétée le débit total actuel et le facteur d'ajustement et à effectuer (S3) l'ajustement dynamique du débit total actuel dans la gamme limite définie autour de la somme des débits nominaux souhaités.

**3.** Procédé selon l'une des revendications 1 ou 2, **caractérisé par** les étapes consistant à détecter (S1) les données caractéristiques des vannes de régulation (V11, V22, V33, Vii), destinées aux consommateurs (V1, V2, V3, Vi) du groupe, par réglage des vannes de régulation (V11, V22, V33, vii), destinées à une première partie de consommateurs (V1, V2, V3, Vi), dans une position de blocage, et mesurer le débit (F) à travers une deuxième partie de consommateurs (V1, V2, V3, Vi) dans différentes positions (H) au moyen du capteur de débit commun (4).

**4.** Procédé selon l'une des revendications 1 à 3, **caractérisé par** les étapes consistant à détecter (S1) des données caractéristiques d'une vanne de régulation (V11, V22, V33, Vii), destinées à un consommateur (V1, V2, V3, Vi) du groupe, par réglage des vannes de régulation (V11, V22, V33, Vii), destinées aux autres consommateurs (V1, V2, V3, Vi) du groupe, dans une position de blocage, et mesurer le débit (F) à travers la vanne de régulation (V11, V22, V33, Vii) de l'un des consommateurs (V1, V2, V3, Vi) dans différentes positions (H) au moyen du capteur de débit commun (4).

**5.** Procédé selon l'une des revendications 1 à 4, **caractérisé par** l'étape consistant à effectuer une régulation exceptionnelle des consommateurs (V1, V2, V3, Vi) lorsqu'une position de butée est atteinte pour au moins une des vannes de régulation (V11, V22, V33, Vii).

**6.** Procédé selon l'une des revendications 1 à 5, **caractérisé par** les étapes consistant à mémoriser des informations de priorité pour l'un des consommateurs (V1, V2, V3, Vi), et couper le débit à travers le consommateur (V1, V2, V3, Vi) de priorité faible, lorsqu'une position de butée est atteinte pour une vanne de régulation (V11, V22, V33, Vii) d'un consommateur (V1, V2, V3, V1) de priorité plus élevée.

**7.** Procédé selon l'une des revendications 1 à 6, **caractérisé par** l'étape consistant à réduire la puissance du ventilateur ou de la pompe lorsqu'une position minimale définie est atteinte pour au moins une des vannes de régulation (V11, V22, V33, Vii) afin de supprimer les bruits d'écoulement générés par un fluide.

**8.** Procédé selon l'une des revendications 1 à 7, **caractérisé par** l'étape consistant à régler les positions ($H_i$) des vannes de régulation (V11, V22, V33, Vii) correspondantes sur la base des données caractéristiques et du facteur d'ajustement et, si la puissance de la pompe est réduite et la somme des débits nominaux souhaités à travers les consommateurs (V1, V2, V3, Vi) est constante, avec un degré d'ouverture majoré des vannes de régulation (V11, V22, V33, Vii) correspondantes jusqu'à une position maximale définie pour au moins une des vannes de régulation (V11, V22, V33, Vii).

9. Dispositif (1) d'ajustement d'un groupe de consommateurs (V1, V2, V3, Vi) dans un système de transport de fluide (5, 5') dans lequel chaque consommateur (V1, V2, V3, Vi) est équipé d'une vanne de régulation motorisée (V11, V22, V33, Vii) qui sert à réguler le débit à travers le consommateur (V1, V2, V3, Vi) et dans lequel un capteur de débit commun (4) est prévu pour mesurer le débit total à travers le groupe de consommateurs (V1, V2, V3, Vi), **caractérisé par** :

> un module de données caractéristiques (11) qui est adapté pour mémoriser, pour chacun des consommateurs (V1, V2, V3, Vi), des données caractéristiques des vannes de régulation (V11, V22, V33, Vii) associées qui déterminent, pour des débits nominaux ($F_i$) à travers la vanne de régulation (V11, V22, V33, Vii), associée au consommateur (V1, V2, V3, Vi) concerné, une position ($H_i$) de la vanne de régulation (V11, V22, V33, Vii) correspondante, et
> un module d'ajustement (12) qui est adapté pour déterminer au moyen du capteur de débit (4) le débit total actuel à travers le groupe de consommateurs (V1, V2, V3, Vi), fixer un facteur d'ajustement sur la base du débit total actuel et d'une somme des débits nominaux souhaités à travers les consommateurs (V1, V2, V3, Vi) et effectuer un ajustement dynamique des consommateurs (V1, V2, V3, Vi) par réglage des positions ($H_i$) des vannes de régulation (V11, V22, V33, Vii) correspondantes sur la base des données caractéristiques des vannes de régulation (V11, V22, V33, Vii), et du facteur d'ajustement.

10. Dispositif (1) selon la revendication 9, **caractérisé en ce que** le module d'ajustement (12) est adapté pour déterminer de façon répétée le débit total actuel et le facteur d'ajustement et effectuer l'ajustement dynamique jusqu'à ce que le débit total actuel se trouve à l'intérieur d'une plage limite définie autour de la somme des débits nominaux souhaités.

11. Dispositif (1) selon l'une des revendications 9 ou 10, **caractérisé en ce que** le module de données caractéristiques (11) est adapté pour détecter les données caractéristiques des vannes de régulation (V11, V22, V33, Vii), destinées aux consommateurs (V1, V2, V3, Vi) du groupe, en raison du fait que les vannes de régulation (V11, V22, V33, Vii), destinées à une première partie des consommateurs (V1, V2, V3, Vi), sont réglées dans une position de blocage, et que le débit (F) à travers une deuxième partie des consommateurs (V1, V2, V3, Vi) est mesuré dans différents positions (H) au moyen du capteur de débit commun (4).

12. Dispositif (1) selon l'une des revendications 9 à 11, **caractérisé en ce que** le module de données caractéristiques (11) est adapté pour détecter les données caractéristiques d'une vanne de régulation (V11, V22, V33, Vii) destinée à l'un des consommateurs (V1, V2, V3, Vi) en raison du fait que les vannes de régulation (V11, V22, V33, Vii), destinées aux autres consommateurs (V1, V2, V3, Vi) du groupe, sont réglées dans une position de blocage et que le débit (F) à travers la vanne de régulation (V11, V22, V33, Vii) de l'un des consommateurs (V1, V2, V3, Vi) est mesuré dans différentes positions (H) au moyen du capteur de débit commun (4).

13. Dispositif (1) selon l'une des revendications 9 à 12, **caractérisé en ce que** le module d'ajustement (12) est adapté pour effectuer une régulation exceptionnelle des consommateurs (V1, V2, V3, Vi) lorsqu'une position de butée est atteinte pour au moins une des vannes de régulation (V11, V22, V33, Vii).

14. Dispositif (1) selon l'une des revendications 9 à 13, **caractérisé en ce que** le module de données caractéristiques (11) est adapté pour mémoriser une indication de priorité pour chacun des consommateurs (V1, V2, V3, Vi), et **en ce que** le module d'ajustement (12) est adapté pour couper le débit à travers les consommateurs (V1, V2, V3, Vii) de faible priorité lorsqu'une position de butée est atteinte pour une vanne de régulation (V11, V22, V33, Vii) d'un consommateur (V1, V2, V3, Vi) de priorité plus élevée.

15. Dispositif (1) selon l'une des revendications 9 à 14, **caractérisé en ce que** le module de d'ajustement (12) est adapté pour réduire la puissance du ventilateur ou de la pompe afin de supprimer les bruits d'écoulement générés par un fluide lorsqu'une position minimale définie est atteinte pour au moins une des vannes de régulation (V11, V22, V33, Vii).

16. Dispositif selon l'une des revendications 9 à 15, **caractérisé en ce que** le module d'ajustement (12) est adapté pour régler les positions ($H_i$) des vannes de régulation (V11, V22, V33, Vii) correspondantes sur la base des données caractéristiques et du facteur d'ajustement et, si la puissance de la pompe est réduite et les somme des débits nominaux souhaités à travers les consommateurs (V1, V2, V3, Vi) est constante, avec un degré d'ouverture majoré des vannes de régulation (V11, V22, V33, Vii) correspondantes jusqu'à une valeur maximale définie pour au moins une des vannes de régulation (V11, V22, V33, Vii).

17. Logiciel comprenant un code de programme informatique destiné à commander un ou plusieurs processeurs d'un dispositif (1) de telle manière que le dispositif (1) met en oeuvre un procédé selon l'une des revendications 1 à 8 pour ajuster un groupe de consommateurs (V1, V2, V3, Vi) dans un système de transport de fluide (5, 5').

**Fig. 1**

**Fig. 2**

SETZEN VON
SOLLDURCHFLÜSSEN
FÜR VERBRAUCHER

S0

ERMITTELN VON
CHARAKTERISTIKDATEN
FÜR VERBRAUCHER

S1

SPEICHERN DER
CHARAKTERISTIKDATEN
FÜR VERBRAUCHER

S2

ÄNDERUNG VON
SOLLDURCHFLÜSSEN?

S4

SETZEN VON
VENTILSTELLUNGEN
FÜR VERBRAUCHER

S31

MESSEN VON
GESAMTDURCHFLUSS

S32

DIFFERENZ VON
GESAMTDURCHFLUSS
UND SUMME VON
SOLLDURCHFLÜSSEN?

S33

BESTIMMEN VON
ABGLEICHFAKTOR

S34

S3

# Fig. 3

16

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69706458
- EP 2085707 A
- EP 0795724 A

- DE 19912588
- EP 2157376 A